(19) Europäisches Patentamt
European Patent Office
Office européen des brevets

(11) Veröffentlichungsnummer: **0 025 179**
**B1**

(12) # EUROPÄISCHE PATENTSCHRIFT

(45) Veröffentlichungstag der Patentschrift: **23.02.83**

(51) Int. Cl.³: **A 01 N 57/18,** C 07 F 9/40

(21) Anmeldenummer: **80105075.8**

(22) Anmeldetag: **27.08.80**

(54) **Verfahren zur Herstellung von propargylgruppenhaltigen Methanphosphonsäureestern.**

(30) Priorität: **06.09.79 DE 2936037**

(43) Veröffentlichungstag der Anmeldung: **18.03.81 Patentblatt 81/11**

(45) Bekanntmachung des Hinweises auf die Patenterteilung: **23.02.83 Patentblatt 83/8**

(84) Benannte Vertragsstaaten: **AT BE CH DE FR GB IT LI NL SE**

(56) Entgegenhaltungen:
EP-A-0 012 320
DE-A-2 406 783
DE-A-2 551 257
DE-A-2 727 479
US-A-3 065 125
US-A-3 860 711

(73) Patentinhaber: **BAYER AG, Zentralbereich Patente, Marken und Lizenzen, D-5090 Leverkusen 1, Bayerwerk (DE)**

(72) Erfinder: **Arend, Günter, Dr., Claudiusstrasse 42, D-4047 Dormagen 1 (DE)**
Erfinder: **Behrenz, Wolfgang, Dr., Untergruendemich 14, D-5063 Overath (DE)**

EP 0 025 179 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von propargylgruppenhaltigen Methanphosphonsäureestern

Die vorliegende Erfindung betrifft ein Verfahren zur Herstellung von propargylgruppenhaltigen Methanphosphonsäureestern.

In der Literatur sind eine Reihe von propargylgruppenhaltigen Phosphorverbindungen als Insektizidsynergisten beschrieben. So werden beispielsweise in der DE-OS Nr. 2551257 sowie in US-PS Nrn. 3944666, 3885031, 3709888, 3652741 und 3555123 Benzyl- und Phenylphosphonsäuremonopropargylalkyl-bzw. -alkinylester beansprucht; in der US „Defensive Publication" T 860711 ist Phenylphosphonsäuredipropargylester genannt. An Phosphorsäureestern sind beispielsweise beschrieben: (Thiono-) Phosphorsäuremono- oder -dipropargylester, wobei halogenierte Cycloalkylreste als dritte Estergruppe an Phosphorsäure eingeführt sind, in der US-PS Nr. 2693483 und Phosphorsäurealkyldipropargylester in der europäischen Patentanmeldung Nr. 78100117.7. Auch Alkanphosphonsäuremono- und -dipropargylester sind beschrieben worden; Chlormethanphosphonsäurepropargylester in US-PS Nr. 4001405, Alkyl- bzw. Alkenylphosphonsäurepropargylester mit mindestens 2 C-Atomen in US-PS Nr. 3856896 bzw. DE-OS Nr. 2406783.

Diese Verbindungen sind alle synergistisch hochwirksam; lediglich der Chlormethanphosphonsäuredipropargylester ist ein weniger wirksamer Synergist. Generell sind Dipropargylester etwas wirksamer als Monopropargylester. Dennoch haben diese Verbindungen noch keinen Eingang in die Praxis gefunden. Hierfür sind zwei Hauptgründe zu nennen: Die mehrheitlich beschriebenen aromatischen bzw. aromatisch-aliphatischen Phosphonsäurepropargylester müssen über die nur in mehrstufigen Synthesen zugänglichen und daher teuren Phosphonsäuredichloride hergestellt werden; zum zweiten müssen die Endprodukte zur Abtrennung von den häufig hochtoxischen Nebenprodukten, wie Pyrophosphonate, gereinigt werden. Dies geschieht bei den durchweg öligen Substanzen vorzugsweise durch Destillation und stellt wegen des sehr hohen Siedepunktes und der unzureichenden thermischen Stabilität dieser Verbindungen für die chemische Technik ein nur schwer lösbares Problem dar. So wird zur Herstellung von Benzylphosphonsäure-O-propargyl-O-propylester in der DE-OS Nr. 2551257 eine Molekulardestillationsvorrichtung vorgeschrieben. Es wird bei einer Badtemperatur von 120°C und einem Druck von 1 bis $1{,}5 \cdot 10^{-4}$ Torr destilliert. Es ist einleuchtend, dass solche Bedingungen in einer Grossanlage nicht realisiert werden können. Phenylphosphonsäuredipropargylester siedet nach US-PS Nr. 3860711 bei 141-142°C bei 0,14 Torr, zersetzt sich jedoch erfahrungsgemäss bereits bei der Destillation.

Demgegenüber weisen die in US-PS Nr. 3856896 und in der europäischen Patentanmeldung Nr. 78100117.7 genannten aliphatischen propargylgruppenhaltigen Phosphate bzw. Phosphonate deutlich niedrigere Siedepunkte auf. Dennoch ist auch hier die Synthese grösserer Produktmengen schwierig. Durch das in der deutschen Offenlegungsvorschrift Nr. 2926652 beschriebene Herstellungsverfahren gelingt die Synthese von Phosphorsäurealkyldipropargylestern in guter Reinheit, so dass sich gegebenenfalls eine Destillation des Reaktionsgemisches erübrigt. Dennoch lässt sich bei einer Grossproduktion eine gleichbleibende Produktqualität nur garantieren, wenn definierte Reinigungsoperationen, beispielsweise eine Destillation, vorgenommen werden.

Es zeigt sich, dass die Destillation beispielsweise der in der europäischen Patentanmeldung Nr. 78100117.7 beschriebenen Verbindungen Phosphorsäureethyldipropargylester und Phosphorsäurepropyldipropargylester im Temperaturbereich zwischen 110 und 140°C bei 0,1 bis 15 mbar Druck nicht ohne thermische Zersetzung durchgeführt werden kann, die Zersetzungsprodukte verschmieren die Destillationsapparatur und verunreinigen das Destillat. Dennoch zeigt die Diffentialthermoanalyse einen stark exothermen Zersetzungsbeginn erst bei 221°C bzw. 229°C bei einer Aufheizgeschwindigkeit von 4°C/min. Die Verbindungen Methanphosphonsäuredipropargylester und Methanphosphonsäuremethylpropargylester zeigen beispielsweise unter gleichen Versuchsbedingungen einen noch etwas niedrigeren Zersetzungsbeginn bei 219°C bzw. 198°C.

Überraschenderweise wurde jedoch gefunden, dass man diese Verbindungen ohne nennenswerte Zersetzung im Druckbereich zwischen 0,1 und 15 mbar destillieren kann. Generell sind Methanphosphonsäurepropargylester besser destillierbar als die entsprechenden Phosphorsäurepropargylester mit gleicher Anzahl an Propargylgruppen und gleicher Gesamtzahl der C-Atome.

Die vorliegende Erfindung betrifft ein Verfahren zur Herstellung von Methanphosphonsäurepropargylestern der Formel I:

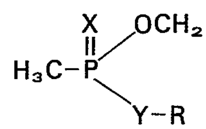

(I)

worin

R einen Alkyl-, Alkenyl- oder Alkinylrest mit höchstens 4 C-Atomen oder einen Arylrest sowie

X und Y Sauerstoff oder Schwefel bedeuten, welches dadurch gekennzeichnet ist, dass man das betreffende Methanphosphonsäureestermonochlorid- oder -dichlorid mit mindestens der äquivalenten Menge Propargylalkohol in einem wässerigen Zweiphasensystem in Gegenwart einer anorganischen Base, vorzugsweise mit Natronlauge, in mindestens äquivalenter Menge als Säurefänger umsetzt.

Die Verbindungen der Formel I weisen eine gute synergistische Wirksamkeit auf; so zeigen die

Wirkstoffkombinationen der Methanphosphonsäureester der Formel I mit Carbamaten, Carbonsäureestern, Phosphorsäureestern, Halogencycloalkanen und Halogenalkanen eine hervorragende Wirkungssteigerung gegenüber den Einzelwirkstoffen bzw. gegenüber deren Summe. Im Gegensatz dazu erweisen sich die literaturbekannten Methoden unter Verwendung von tertiären Aminen als Säurefänger als nur wenig brauchbar, wie das Ergebnis von Beispiel 1 zeigt.

Die Synthese wird in einem Zweiphasensystem aus der wässerigen Lösung einer anorganischen Base und einem leichtflüchtigen, inerten, wenig wasserlöslichen Lösemittel als organischer Phase durchgeführt. Die Ausbeute dieser Reaktion kann durch Verwendung von 0,001 bis 100 mol%, vorzugsweise von 0,1 bis 10 mol%, bezogen auf Phosphonsäurechlorid, eines tertiären Amins oder quartären Ammonium- bzw. Phosphoniumsalzes mit mindestens 9 C-Atomen verbessert werden. Das tertiäre Amin setzt man vorzugsweise in Mengen von 1 bis 10 mol%, bezogen auf Methanphosphonat, als Katalysator ein, während von den quartären Ammonium- bzw. Phosphoniumsalzen 0,01 bis 1 mol% ausreichend sind.

Geeignete organische Lösungsmittel sind Halogenkohlenwasserstoffe wie Methylenchlorid, Chloroform, Tetrachlorkohlenstoff, Dichlorethan, Trichlorethylen, Tetrachlorethylen, Chlorbenzol und Dichlorbenzol; Kohlenwasserstoffe wie Benzol, Toluol, Xylol und Verschnitte hiervon mit aliphatischen Kohlenwasserstoffen.

Ether wie Diethylether, Dipropylether, Dibutylether; Ketone wie Methylpropylketon, Methylbutylketon, Methylisobutylketon und Ester wie Essigsäureethylester, Essigsäurepropylester, Essigsäurebutylester, Propionsäureethylester, Propionsäurebutylester.

Eine Auswahl geeigneter Katalysatoren für das erfindungsgemässe Verfahren ist nachstehend aufgeführt:

Benzyldimethylamin, Dibenzylmethylamin, Benzyldiethylamin, Benzyl-di(2-cyanoethyl)-amin, Tributylamin, Tris-2-ethylhexylamin, Stearyldimethylamin, Tetrabutylammoniumchlorid, Tricaprylmethylammoniumchlorid, Tris-2-ethylhexylmethylammoniumchlorid, Trioctylmethylammoniumchlorid, Trimethylphenylammoniumchlorid, Trimethylbenzylammoniumchlorid, Triethylbenzylammoniumchlorid, Trimethylbenzylammoniumhydroxid, Benzyldodecyldimethylammoniumchlorid, Stearyltrimethylammoniumchlorid, Lauryltrimethylammoniumchlorid, Myristyltrimethylammoniumchlorid, Tetrabutylphosphoniumchlorid, Triphenylmethylphosphoniumbromid.

Als anorganische Basen dienen vorzugsweise wasserlösliche Alkali- bzw. Erdalkalihydroxide und -carbonate wie Natriumhydroxid, Kaliumhydroxid, Bariumhydroxid, Natriumbicarbonat, Natriumcarbonat und Kaliumcarbonat. Auch wenig wasserlösliche Erdalkalibasen wie Magnesiumcarbonat, Magnesiumoxid, Calciumoxid, Calciumcarbonat, Bariumoxid und Bariumcarbonat können verwendet werden; sie werden jedoch vorteilhaft zusammen mit Propargylalkohol, Wasser und Katalysator im Reaktionsgefäss vorgelegt und abgeschlämmt.

Eine bevorzugte Synthese für die Methanphosphonsäurepropargylester der Formel I geht von Methyldichlorphosphin aus (s. Formel II). Durch Oxidation mit Sauerstoff bzw. Schwefel kann man hieraus leicht Methanphosphonsäuredichlorid bzw. Methanthionophosphonsäuredichlorid herstellen, welches mit Propargylalkohol und gegebenenfalls anderen aliphatischen Alkoholen zu Methanphosphonsäure- bzw. Methanthionophosphonsäuredipropargylester bzw. -propargylalkylester umgesetzt werden kann

Formel (II)

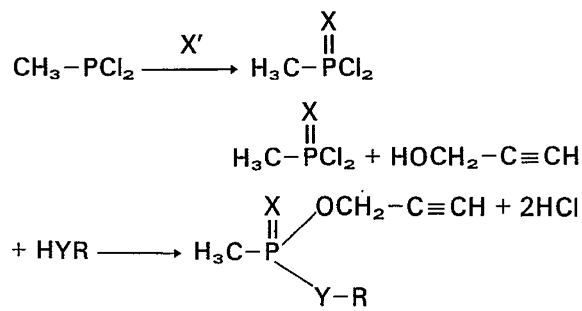

R, X und Y haben die in Formel I angegebene Bedeutung.

Ein anderes bevorzugtes Herstellungsverfahren geht von Methanthionophosphonsäuredialkylestern oder Methanphosphonsäurediphenylester aus, welche mit Thionylchlorid oder Phosphorpentachlorid zu Methanphosphonsäuredichlorid bzw. Methanthionophosphonsäuredichlorid umgesetzt werden (s. Formel III)

Formel III (mit Thionylchlorid formuliert)

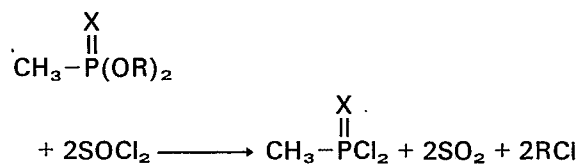

X und R haben die in Formel I angegebene Bedeutung.

In einem weiteren bevorzugten Herstellungsverfahren für Methanphosphonsäuremonopropargylester geht man ebenfalls von Methanphosphonsäurediestern bzw. Methanthionophosphonsäurediestern aus und setzt diese mit Phosgen oder Oxalylchlorid zu Methanphosphonsäure- bzw. Methanthionophosphonsäureesterchloriden um, aus denen mit Propargylalkohol die entsprechenden Propargylester leicht zugänglich sind (s. Formel IV).

Formel IV (formuliert für Phosgen)

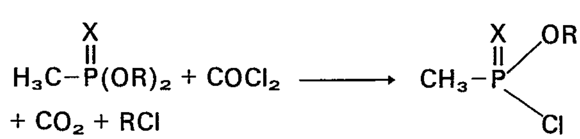

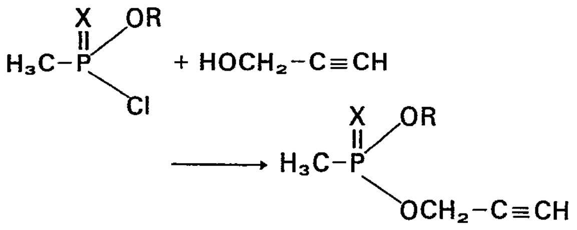

X und R haben die bei Formel I angegebene Bedeutung.

Als erfindungsgemäss erhältliche Methanphosphonsäurepropargylester der Formel I seien beispielsweise genannt

Methanphosphonsäuredipropargylester
Methanphosphonsäuremethylpropargylester
Methanphosphonsäureethylpropargylester
Methanphosphonsäure-n-propylpropargylester
Methanphosphonsäure-i-propylpropargylester
Methanphosphonsäureallylpropargylester
Methanphosphonsäure-n-butylpropargylester
Methanphosphonsäure-i-butylpropargylester
Methanphosphonsäure-2-butylpropargylester
Methanphosphonsäurephenylpropargylester
Methanthionophosphonsäure-O,O-dipropargylester
Methanthionophosphonsäure-O,O-methylpropargylester
Methanthionophosphonsäure-O,O-ethylpropargylester
Methanthionophosphonsäure-O,O-propylpropargylester
Methanthiophosphonsäure-O-propargyl-S-ethylester
Methanthiophosphonsäure-O-propargyl-S-ethylester
Methanthionophosphonsäure-O-propargyl-S-methylester

*Beispiel 1*

*Methanphosphonsäuredipropargylester*

Methanphosphonsäuredichlorid wird nach L.D. Quin, C.H. Rolston, „J. Org. Chem." *23*, 1693 (1958) durch Oxidation von Methyldichlorphosphin hergestellt.

*1a) Reaktion in Gegenwart von Pyridin (Vergleichsbeispiel)*

1 mol Methanphosphonsäuredichlorid und 2 g Phenothiazin werden in 300 ml Toluol gelöst und bei einem 10-20° C zu einem Gemisch aus 2,2 mol Pyridin oder Triethylamin und 112 g (2 mol) Propargylalkohol tropfenweise hinzugegeben. Man rührt 3 h bei 20-30° C und filtriert vom Hydrochlorid ab. Das Filtrat wird im guten Vakuum fraktioniert.

Kp.: 76° C/0,1 mbar
$n_D^{20}$: 1,4647
Ausbeute: 24%, auf 100%ige Ware bezogen
Reinheit nach GC: 84%

*1b) Reaktion im Zweiphasensystem mit NaOH als Säurefänger (erfindungsgemäss)*

Man legt in einem Rührkolben 224 g Propargylalkohol, 250 ml Methylenchlorid und 0,2 g Tricaprylmethylammoniumchlorid bei 0° C vor und lässt in getrennten Zuläufen eine Lösung aus 133 g Methanphosphonsäuredichlorid in 250 ml Methylenchlorid und 156 g 51%ige Natronlauge gleichzeitig zufliessen. Der pH-Wert wird zwischen 9 und 10 gehalten. Das ausgefallene Kochsalz wird abgesaugt, die organische Phase wird eingeengt und im Vakuum fraktioniert.

Kp.: 87° C/0,2 mbar
$n_D^{20}$: 1,4655
Reinheit nach GC: 98,5%
Ausbeute: 86,6%

Zersetzungsbeginn nach Differentialthermoanalyse: 219° C (Bedingungen: geschlossenes Gefäss, $N_2$-Atmosphäre, Aufheizrate: 4° C/min).

*1c) Beispiel 1b wird ohne Zusatz von Tricaprylmethylammoniumchlorid wiederholt.*

Ausbeute: 80,5%

*Beispiel 2*

*Methanthionophosphonsäuredipropargylester*

Nach der Vorschrift in Houben-Weyl „Methoden der Organischen Chemie", Bd. 12/1, S. 555, stellt man Methanthionophosphonsäuredichlorid aus Methyldichlorphosphin und Schwefel her.

Die Umsetzung zum Methanthionophosphonsäuredipropargylester führt man nach der in Beispiel 1b angegebenen Methode in einem Zweiphasensystem aus Wasser- und Methylenchlorid mit Tricaprylmethylammoniumchlorid als Phasentransferkatalysator durch. Um vollständigen Umsatz zu erzielen, muss man die Reaktion bei 40° C zu Ende führen.

Kp.: 60° C/0,05 mbar
$n_D^{20}$: 1,5103
Ausbeute: 67,4%
Reinheit nach GC: 98,9%

*Analyse:*

| | | | | |
|---|---|---|---|---|
| Berechnet: | C 44,7 | H 4,8 | S 17,0 | P 16,5% |
| Gefunden: | C 45,1 | H 5,1 | S 17,3 | P 16,3% |

## Patentansprüche

1. Verfahren zur Herstellung von Methanphosphonsäurepropargylestern der allgemeinen Formel (I)

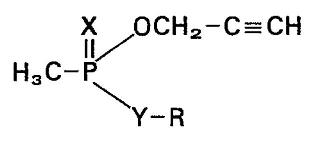

(I)

in welcher

R einen Alkyl-, Alkenyl oder Alkinylrest mit höchstens 4 C-Atomen oder einen Arylrest, und

X und Y Sauerstoff oder Schwefel bedeuten, dadurch gekennzeichnet, dass man das betreffende Methanphosphonsäureestermonochlorid- oder -dichlorid mit mindestens der äquivalenten Menge Propargylalkohol in einem wässerigen Zweiphasensystem in Gegenwart einer anorganischen Base, vorzugsweise mit Natronlauge, in mindestens äquivalenter Menge als Säurefänger umsetzt.

2. Verfahren zur Herstellung von Methanphosphonsäurepropargylestern gemäss Anspruch 1, dadurch gekennzeichnet, dass man die Reaktion im Zweiphasensystem unter Verwendung von 0,001 bis 100 mol%, bezogen auf Phosphorsäurechlorid, eines tertiären Amins, quartären Ammonium- oder Phosphoniumsalzes mit mindestens 9 C-Atomen als Katalysator ansetzt.

3. Verfahren nach einem der beiden Ansprüche 1 oder 2, dadurch gekennzeichnet, dass man Methylenchlorid, Chloroform oder Toluol als Lösungsmittel verwendet.

## Claims

1. Process for the preparation of propargyl methanephosphonates of the general formula (I)

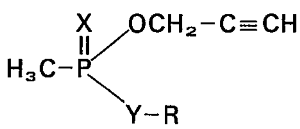

(I)

in which

R denotes an alkyl, alkenyl or alkinyl radical having a maximum of 4 carbon atoms or an aryl radical, and

X and Y denote oxygen or sulphur,

characterized in that the relevant ester of methanephosphonyl monochloride or methanephosphonyl dichloride is reacted with at least the equivalent amount of propargyl alcohol in an aqueous two-phase system in the presence of an inorganic base, preferably with sodium hydroxide solution, as the acid-binding agent, in at least the equivalent amount.

2. Process for the preparation of propargyl methanephosphonates according to claim 1, characterized in that the reaction is carried out in a two-phase system using 0.001 to 100 mol%, relative to phosphoryl chloride, of a tertiary amine, quaternary ammonium or phosphonium salt, having at least 9 carbon atoms, as the catalyst.

3. Process according to claim 1 or 2, characterized in that methylene chloride, chloroform or toluene is used as the solvent.

## Revendications

1. Procédé de préparation d'esters propargyliques d'acides méthanephosphoniques de formule générale (I)

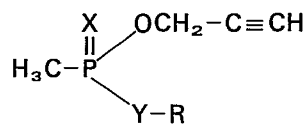

(I)

dans laquelle

R représente un groupe alkyle, alcényle ou alcynyle contenant au maximum 4 atomes de carbone ou un groupe aryle, et

X et Y représente l'oxygène ou le soufre,

caractérisé en ce que l'on fait réagir un estermonochlorure ou un dichlorure d'acide méthanephosphonique correspondant avec au moins la quantité équivalente d'alcool propargylique dans un système aqueux à deux phases en présence d'une base minérale, de préférence la lessive de soude, en quantité au moins équivalente, servant d'accepteur d'acide.

2. Procédé de préparation d'esters propargyliques d'acides méthanephosphoniques selon la revendication 1, caractérisé en ce que l'on effectue la réaction dans un système à deux phases en utilisant comme catalyseur de 0,001 à 100 mol%, par rapport au chlorure d'acide phosphorique, d'une amine tertiaire, d'un sel d'ammonium ou de phosphonium quaternaire contenant au moins 9 atomes de carbone.

3. Procédé selon l'une des revendications 1 ou 2, caractérisé en ce que l'on utilise en tant que solvant le chlorure de méthylène, le chloroforme ou le toluène.